(19) Europäisches Patentamt
European Patent Office
Office européen des brevets

(11) Veröffentlichungsnummer : **0 383 127 B1**

(12) # EUROPÄISCHE PATENTSCHRIFT

(45) Veröffentlichungstag der Patentschrift : **23.12.92 Patentblatt 92/52**

(51) Int. Cl.$^5$ : **C08L 15/00,** C08L 23/08, // (C08L15/00, 23:08), (C08L23/08, 15:00)

(21) Anmeldenummer : **90102177.4**

(22) Anmeldetag : **03.02.90**

(54) **Vernetzbare Mischungen auf Basis von hydriertem Nitrilkautschuk und Ethylen/Acrylinitril-Copolymerisat.**

Die Akte enthält technische Angaben, die nach dem Eingang der Anmeldung eingereicht wurden und die nicht in dieserPatentschrift enthalten sind.

(30) Priorität : **16.02.89 DE 3904715**

(43) Veröffentlichungstag der Anmeldung : **22.08.90 Patentblatt 90/34**

(45) Bekanntmachung des Hinweises auf die Patenterteilung : **23.12.92 Patentblatt 92/52**

(84) Benannte Vertragsstaaten : **BE DE FR GB IT NL**

(56) Entgegenhaltungen :
**DE-A- 3 229 871**
**DE-A- 3 339 385**

(73) Patentinhaber : **BAYER AG**
**W-5090 Leverkusen 1 Bayerwerk (DE)**

(72) Erfinder : **Szentivanyi, Zsolt, Dr.**
**Carl-Rumpff-Strasse 34**
**W-5090 Leverkusen 1 (DE)**
Erfinder : **Obrecht, Werner, Dr.**
**Holderbergerstrasse 108**
**W-4130 Moers 2 (DE)**
Erfinder : **Wassen, Jürgen, Dr.**
**Dürscheider Weg 4**
**W-5090 Leverkusen 3 (DE)**

**EP 0 383 127 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft Mischungen auf Basis von 1) hydriertem Nitrilkautschuk und von 2) Ethylen/Acrylnitril-Copolymerisat mit einem Gehalt copolymerisierter Einheiten bestimmter mehrfunktioneller Verbindungen, die Verwendung dieser Mischungen zur Herstellung von Vulkanisaten und diese Vulkanisate selbst.

Aus der DE-OS 3 229 871 sind ölbeständige, (aufgrund ihrer Viskosität) gut verarbeitbare Kautschukzusammensetzungen aus 50 bis 98 Gewichtsteilen eines teilhydrierten Nitrilkautschuks und 2 bis 50 Gewichtsteilen eines flüssigen Copolymerisats, z.B. eines Butadien/Acrylnitril-Copolymerisats, bekannt. Die aus diesen Zusammenetzungen hergestellten Vulkanisate sollen eine hohe Lösungsmittelbeständigkeit aufweisen. Diese wünschenswerte Eigenschaft wird allerdings durch verschlechterte mechanische Eigenschaften erkauft; vgl. DE-OS 3 229 871, Tabelle IV, Vergleich 2 und Beispiel 6.

Überraschenderweise wurde nun gefunden, daß Kautschukmischungen aus

(1) hydriertem Nitrilkautschuk und

(2) Ethylen/Acrylnitril-Copolymerisat, das copolymerisierte Einheiten von Verbindungen mit mindestens zwei Acryloyl- bzw. Methacryloylgruppen pro Molekül enthält,

gut verarbeitbar sind und Vulkanisate hoher Lösungsmittelbeständigkeit ergeben, ohne daß es zu wesentlichen Einbußen bei den mechanischen Eigenschaften kommt.

Gegenstand der Erfindung sind also Mischungen aus

1) 20 bis 98, vorzugsweise 75 bis 95, Gew.-%, bezogen auf die Summe der Komponenten 1) + 2), hydriertem Nitrilkautschuk und

2) 80 bis 2, vorzugsweise 25 bis 5, Gew.-%, bezogen auf die Summe der Komponenten 1) + 2), Ethylen/Acrylnitril-Copolymerisat,

wobei das Copolymerisat 2) 50 ppm bis 2 Gew.-%, vorzugsweise 100 ppm bis 1 Gew.-%, an copolymerisierter (Meth-)Acryloylverbindung mit mindestens 2 Acryloyl- oder Methacryloylgruppen pro Molekül dieser (Meth-)Acryloylverbindung enthält.

Die Hydrierung von Nitrilkautschuk ist bekannt; US-PS 3 700 637, DE-OS 2 539 132, 3 046 008, 3 046 251, 3 227 650, 3 329 974, EP-A 111 412, FR-PS 2 540 503. Hydrierter Nitrilkautschuk zeichnet sich vor allem durch vergleichsweise hohe Stabilität gegen Oxidation aus.

Den hydrierten Nitrilkautschuken 1) liegen Butadien/Acrylnitril-Copolymerisate mit einem Gehalt an copolymerisiertem Acrylnitril von 10 bis 60, vorzugsweise 20 bis 50 Gew.-% zugrunde. "Hydriert" im Sinne der Erfindung bedeutet, daß sowohl teilhydrierte Nitrilkautschuke, bei denen mindestens 80, vorzugsweise zwischen 85 % und 95 % der Doppelbindungen hydriert sind, sowie vollhydrierte Nitrilkautschuke, bei denen vorzugsweise mindestens 95 %, insbesondere mindestens 99 %, der hydrierbaren C=C-Doppelbindungen (d.h. in der Regel: der vom Butadien stammenden Einheiten) hydriert sind, während die C≡N-Dreifachbindungen der Nitrilgruppen im wesentlichen, d.h. zu mindestens 90 % der ursprünglich vorhandenen Nitrilgruppen, unhydriert bleiben. Der Hydriergrad kann IR- oder NMR-spektroskopisch sowie mit üblichen chemischen Methoden bestimmt werden.

Die hydrierten Nitrilkautschuke 1) besitzen in der Regel Mooney-Viskositäten (DIN 53 523) von 10 bis 150, vorzugsweise 25 bis 120 (ML 1+4) 100°C.

Für die Herstellung des Ethylen/Acrylnitril-Copolymerisats 2) bevorzugte (Meth-) Acryloylverbindungen umfassen Verbindungen mit einem Molekulargewicht von 126 bis 1000, vorzugsweise von 126 bis 500, beispielsweise Acrylsäureanhydrid, Methacrylsäureanhydrid, die Acrylate und Methacrylate von mehrwertigen, insbesondere von 2- und 3-wertigen, aliphatischen, cycloaliphatischen, araliphatischen und aromatischen Alkoholen mit 2 bis 24 C-Atomen pro Molekül, also z.B. Acrylate und Methacrylate von Ethylenglykol, Propandiol-1,2 und -1,3, Butandiol-1,2, -1,3, -2,3 und -1,4, Neopentylglykol, Hexandiolen, insbesondere Hexandiol-1,6, Cyclohexandiol-1,4, 1,4-Bis(hydroxymethyl)-cyclohexan, Hydrochinon, Resorcin, Bisphenol-A, oxethyliertem Bisphenol-A, Hydrochinon-di(β-hydroxyethyl)-ether; von Glycerin, Trimethylolethan und -propan, Phloroglucin.

Bevorzugte (Meth-)Acryloylverbindungen sind auch Acrylate und Methacrylate von Polyetherpolyolen, vorzugsweise von Polyethylen- und Polypropylenglykolen mit 1 bis 20, vorzugsweise 1 bis 12, Ether-Sauerstoffatomen pro Molekül; insbesondere von Di- und Triethylenglykol und von Di- und Tripropylenglykol.

Neben den einzusetzenden (Meth-)Acryloylverbindungen können bis zu 10 Gew.-% der Summe der einzusetzenden Monomeren Ethylen und Acrylnitril durch andere Comonomere ersetzt werden. Bevorzugte Beispiele solcher Comonomerer sind Kohlenmonoxid und vor allem Verbindungen, die außer einer copolymerisierbaren C=C-Doppelbindung noch eine reaktive Gruppe enthalten, die beim Einbau des Monomeren in die Polymerkette erhalten bleibt und eine Vulkanisation des erhaltenen Copolymerisats mit verschiedenen Vulkanisationsmitteln erleichtern. Solche Comonomere mit reaktiven Gruppen sind z.B. Verbindungen der Formel

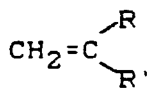

worin
R H, $-CH_3$, $-C_2H_5$, -COOH und
R′ -COOH, $-CONH_2$, $-COOCH_2OH$,

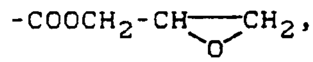

$-COOCH_2CH=CH_2$, $-COOCH_2CH_2Cl$,
$-CONHCH=CH_2$
bedeuten.

Die Ethylen/Acrylnitril-Copolymerisate können nach dem Masse-Hochdruckverfahren bei Drucken von 500 bis 5000, vorzugsweise 1000 bis 3000, bar und Temperaturen von 50 bis 450°C, vorzugsweise von 120 bis 350°C, hergestellt werden.

Das Verfahren zur Herstellung der Ethylen/Acrylnitril-Copolymerisate 2) kann durch radikalbildende Substanzen initiiert werden. Zu den geeigneten Polymerisationsinitiatoren zählen diejenigen Verbindungen, die auch für die Hochdruckhomopolymerisation des Ethylens eingesetzt werden. Geeignet ist beispielsweise Sauerstoff, vorzugsweise in Mengen von 10 bis 1000 Mol-ppm, bezogen auf zu polymerisierende Monomere. Andere bevorzugte Polymerisationsinitiatoren sind z.B. Azoverbindungen wie Azo-bis-isobutyronitril sowie Peroxide, Hydroperoxide und ihre Mischungen, vor allem aber Mischungen von Sauerstoff und Peroxiden und/oder Hydroperoxiden. Bevorzugte Peroxide und Hydroperoxide umfassen tert.-Butylperpivalat, Di-tert.-butylperoxid, tert.-Butylhydroperoxid, tert.-Butylperbenzoat, Dilauroylperoxid, tert.-Butylperisooctanoat und tert.-Butylperisononanat. Besonders geeignet sind die Peroxide Di-tert.-butylperoxid, tert.-Butylperpivalat und tert.-Butylperisononanat.

Die Konzentration des zudosierten Initiators liegt im allgemeinen zwischen 0,001 bis 100 Mol-ppm, bevorzugt 0,1 bis 30 Mol-ppm, bezogen auf gesamte, der Polymerisation zugeführte (d. h. eingesetzte) Monomere. Als geeignetes Lösungsmittel für den Initiator werden zweckmäßig aliphatische Kohlenwasserstoffe wie Octan oder Benzin verwendet. Es können aber auch andere inerte Lösungsmittel wie Chlorbenzol, Cyclohexan oder Methanol eingesetzt werden.

Die üblichen Regler, z.B. Kohlenwasserstoffe wie Propan, Propen, iso-Octan, Ketone wie Aceton, Ethylmethylketon, Aldehyde wie Propionaldehyd wirken auch hier regelnd. Man verzichtet deshalb vorzugsweise auf die Zugabe solcher Substanzen. Ist ihre Verwendung, z.B. als Lösungsmittel für den Initiator oder für die Spülung von Rührwellen, unumgänglich, so kann der regelnde Einfluß dieser Verbindungen durch Höherdosierung der (Meth-)Acryloylverbindung oder durch Zudosierung üblicher Vernetzer kompensiert werden.

Die Polymerisation erfolgt normalerweise unter adiabatischen Reaktionsbedindungen in kontinuierlichem Verfahren. Als Reaktor kann ein Rührautoklav oder eine Kaskade solcher Autoklaven verwendet werden. Für die Durchführung des Verfahrens ist auch ein Rohrreaktor oder eine Kombination aus einem Rührautoklaven und einem Rohrreaktor geeignet. Besonders bevorzugt wird die Serienfahrweise mit mehreren Rührautoklaven.

Das Ethylen/Acrylnitril-Copolymerisat 2) kann beispielsweise folgendermaßen aufgearbeitet werden: Im Anschluß an die Polymerisation wird das Reaktionsgemisch in eine Hochdruckprodukttrennzone geleitet, in der ein Druck zwischen 100 und 500 bar und eine Temperatur zwischen 150 und 300°C herrscht. In diesem Hochdruckproduktabscheider wird das im Reaktor erhaltene Copolymerisat von nicht polymerisierten Monomeren abgetrennt. Aus dem Hochdruckproduktabscheider wird das Copolymerisat in die Niederdruckprodukttrennzone, in der ein Druck von unter 10 bar herrscht, geführt.

Vom Niederdruckproduktabscheider wird das erhaltene Produkt über ein Austragsaggregat geführt, abgekühlt und granuliert. Bevorzugt ist die Verwendung eines Unterwassergranulators, wobei das eingesetzte Wasser Zusätze zur Reduktion der Verklebungstendenz der Granulate enthalten kann. Bevorzugt ist außerdem, daß das Produkt nach dem Niederdruckproduktabscheider in einem geeigneten Lösungsmittel, wie z. B. in chlorierten Kohlenwasserstoffen (Chlorbenzol, Dichlorbenzol, Methylenchlorid, Chloroform), Ketonen (Aceton, Methylethylketon) oder Ethern (Tetrahydrofuran, Dioxan) gelöst, mit einer Lösung hydrierten Nitrilkautschuks gemischt und dann als Polymerblend isoliert wird.

Die Ethylen/Acrylnitril-Copolymerisate 2) besitzen vorzugsweise Gelgehalte unter 0,2 Gew.-%, bezogen auf Copolymerisat und bestimmt als unlöslicher Rückstand nach 24-stündiger Extraktion mit Chlorbenzol im Soxhlet-Aufsatz. Qualitativ können Gelanteile sehr leicht als Oberflächenrauhigkeit extrudierter Copolymerisatstränge mit Durchmessern von 2 bis 5 mm erkannt werden.

Der Schmelzflußindex (MFI) der Ethylen/Acrylnitril-Copolymerisate 2) liegt in der Regel zwischen 0,1 g/10 min (gemessen bei 190°C/2,16 kp) und 100 g/10 min (gemessen bei 120°C/2,16 kp); ihre als Zahlenmittel $\overline{M}_n$ bestimmten Molekulargewichte liegen im Bereich von 15 000 bis 200 000, vorzugsweise von 22 000 bis 70 000 (membranosmometrisch bestimmt in Chlorbenzol); ihre Mooney-Viskositäten gemäß DIN 53 523 betragen im allgemeinen 1 bis 120, vorzugsweise 1 bis 30 (ML 1 + 4) 100°C.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1000 $sec^{-1}$, vorzugsweise 1 bis 200 $sec^{-1}$ arbeiten.

Den erfindungsgemäßen Mischungen können übliche Füllstoffe und Hilfsmittel, wie beispielsweise Weichmacher, Harze, Faktisse und Stabilisatoren zur Erzielung bestimmter Rohmischungs- oder Vulkanisateigenschaften zugesetzt werden.

Für die meisten Anwendungen setzt man die erfindungsgemäßen Mischungen in vulkanisierter Form ein. Die Vulkanisation kann - gegebenenfalls nach Zugabe von Füllstoffen, Stabilisatoren etc. - z.B. durch energiereiche Strahlung oder durch Vernetzung mit Peroxiden oder mit mehrfunktionellen, vernetzend wirkenden Verbindungen (wie z.B. Triallylcyanurat, Triallylisocyanurat, Bismaleinimiden oder Divinylbenzol) erfolgen.

"Vulkanisiert" im Sinne der Erfindung bedeutet, daß bei 10-stündiger Extraktion im Soxhlet-Aufsatz mit Toluol als Extraktionsmittel weniger als 10, vorzugsweise weniger als 5 Gew.-%, bezogen auf die Summe der Komponenten 1) und 2), extrahierbar ist.

Die Vulkanisation mit Peroxiden kann bei Temperaturen von 100 bis 200°C, vorzugsweise 130 bis 180°C, gegebenenfalls unter einem Druck von 10 bis 200 bar, erfolgen. Im Anschluß an die Vulkanisation können die Vulkanisate durch Lagerung bei höherer Temperatur getempert werden.

Die erhaltenen Vulkanisate können beispielsweise in Form von Dichtungen, Schläuchen, Kabelmänteln und dynamisch belasteten Artikeln, wie Antriebs- und Zahnriemen, Luftfedern, Dämpfungselementen usw. verwendet werden.

Die in den nachfolgenden Beispielen genannten Teile sind Gewichtsteile; Prozentangaben bedeuten Gew.-%.

## Beispiele

Als hydrierter Nitrilkautschuk 1) (HNBR) wurde das Hydrierungsprodukt eines Butadien/Acrylnitril-Copolymerisats mit einem Acrylnitrilgehalt von 34,8 % und einem Hydriergrad der C=C-Doppelbindungen von über 99 % eingesetzt. Der hydrierte Nitrilkautschuk besaß eine Mooney-Viskosität von 77 (ML 1+4) 100°C.

Als Ethylen/Acrylnitril-Copolymerisat 2) (EANMA) wurde ein Copolymerisat mit einer Mooney-Viskosität von 3 (ML 1+4) 100°C und einem Gehalt an copolymerisiertem Acrylnitril von 30,8 %, das unter Verwendung von 950 ppm Methacrylsäureanhydrid hergestellt wurde, eingesetzt.

Die Komponenten wurden auf einer Walze gemischt, 20 Minuten bei 170°C vulkanisiert und 4 Stunden bei 150°C nachgetempert. Die Rezepturen und die gemessenen Werte sind der folgenden Tabelle zu entnehmen.

| Beispiel | | Vergleich | 1 | 2 |
|---|---|---|---|---|
| HNBR | | 100 | 90 | 75 |
| EANMA | | - | 10 | 25 |
| Ruß N 762 | | 80 | 80 | 80 |
| ZnO | | 2 | 2 | 2 |
| Trioctyltrimellitat | | 8 | 8 | 8 |
| MgO | | 3 | 3 | 3 |
| Triallylisocyanurat | | 1,5 | 1,5 | 1,5 |
| Bis(tert.-butylperoxyiso-propyl)benzol (40 %ig) | | 7,0 | 7,5 | 8,0 |
| Mooney-Viskosität der Mischung | [ML1+4/100° C] | 115 | 103 | 80 |
| Zugfestigkeit (F) | [MPa] | 24 | 23 | 20 |
| Bruchdehnung (D) | [%] | 210 | 230 | 220 |
| Spannungswert bei 100 % Dehnung (S) | [MPa] | 8,7 | 8,6 | 8,8 |
| Härte (Shore A) | | 77 | 77 | 79 |
| Alterung im Zellofen 7 Tage/150° C | | | | |
| $(F-F_o/F)\cdot 100$ 1) | [%] | - 1 | - 7 | - 5 |
| $(D-D_o/D)\cdot 100$ 2) | [%] | -39 | -39 | -39 |
| $(S-S_o/S)\cdot 100$ 3) | [%] | +91 | +81 | +68 |
| Δ Härte | [Shore A] | + 6 | + 7 | + 4 |

1) prozentuale Änderung der Zugfestigkeit
2) prozentuale Änderung der Bruchdehnung
3) prozentuale Änderung des Spannungswertes

## Patentansprüche

1. Mischungen aus

   1) 20 bis 98 Gew.-%, bezogen auf die Summe der Komponenten 1) + 2), mindestens zu 80 % hydriertem Nitrilkautschuk und

   2) 80 bis 2 Gew.-%, bezogen auf die Summe der Komponenten 1) + 2), Ethylen/Acrylnitril-Copolymerisat,

   wobei das Copolymerisat 2) 50 ppm bis 2 Gew.-% an copolymerisierter (Meth-)Acryloylverbindung mit mindestens 2 Acryloyl- oder Methacrylolylgruppen pro Molekül dieser (Meth-)Acryloylverbindung enthält.

2. Mischungen nach Anspruch 1 aus
   1) 75 bis 95 Gew. -% mindestens zu 80 % hydriertem Nitrilkautschuk und
   2) 25 bis 5 Gew.-% Ethylen/Acrylnitril-Copolymerisat.

3. Mischungen nach Ansprüchen 1 und 2, wobei das Copolymerisat 2) 100 ppm bis 1 Gew.-% and copolymerisierter (Meth-)Acryloylverbindung enthält.

4. Mischungen nach Ansprüchen 1-3, wonach als (Meth-)Acryloylverbindung Acrylsäureanhydrid oder Methacrylsäureanhydrid ausgewählt wird.

5. Verwendung der Mischungen nach Ansprüchen 1-4 zur Herstellung von Vulkanisaten.

6. Aus den Mischungen nach Ansprüchen 1-4 hergestellte Vulkanisate.

## Claims

1. Mixtures of
   1) 20 to 98% by weight, based on the sum of components 1) + 2), at least 80% hydrogenated nitrile rubber and
   2) 80 to 2% by weight, based on the sum of components 1) + 2), of ethylene/acrylonitrile copolymer,
   copolymer 2) containing at least 50 ppm to 2% by weight copolymerized (meth)acryloyl compound containing at least 2 acryloyl or methacryoyl groups per molecule of this (meth)acryloyl compound.

2. Mixtures as claimed in claim 1 of
   1) 75 to 95% by weight at least 80% hydrogenated nitrile rubber and
   2) 25 to 5% by weight ethylene/acrylonitrile copolymer.

3. Mixtures as claimed in claims 1 and 2, in which the copolymer 2) contains 100 ppm to 1% by weight copolymerized (meth)acryloyl compound.

4. Mixtures as claimed in claims 1 to 3, in which acrylic anhydride or methacrylic anhydride is used as the (meth)acryloyl compound.

5. The use of the mixtures claimed in claims 1 to 4 for the production of vulcanizates.

6. Vulcanizates produced from the mixtures claimed in claims 1 to 4.

## Revendications

1. Mélanges de:
   1) 20 à 98 % en poids, par rapport à la somme des composants 1) + 2), de caoutchouc nitrile hydrogéné à au moins 80%, et
   2) 80 à 2 % en poids, par rapport à la somme des composants 1) + 2), de copolymère d'éthylène/acrylonitrile,
   le copolymère 2) contenant 50 ppm à 2 % en poids d'un composé copolymérisé (méth)acryloylique avec au moins 2 groupes acryloyle ou (méth)acryloyle par molécule de ce composé (méth)acryloylique.

2. Mélanges selon la revendication 1, de:
   1) 75 à 95 % en poids de caoutchouc nitrile hydrogéné à au moins 80%, et
   2) 25 à 5 % en poids d'un copolymère d'éthylène/acrylonitrile.

3. Mélanges selon les revendications 1 et 2, dans lesquels le copolymère 2) contient 100 ppm à 1 % en poids d'un composé (méth)acroylique copolymérisé.

4. Mélanges selon les revendications 1 à 3, où l'on choisit comme composé (méth)acroylique l'anhydride d'acide acrylique ou l'anhydride d'acide méthacrylique.

**5.** Utilisation des mélanges selon les revendications 1 à 4 pour la fabrication de vulcanisats.

**6.** Vulcanisats fabriqués à partir des mélanges selon les revendications 1 à 4.